# EUROPEAN PATENT APPLICATION

(11) **EP 1 972 932 A1**
(43) Date of publication of application: **24.09.2008**
(21) Application number: 07706610.8
(22) Date of filing: 11.01.2007
(51) Int. Cl.: G01N 27/62, G01N 23/04, G01N 23/05, G08B 25/04

(54) **SECURITY GATE SYSTEM AND SECURITY GATE CONTROL METHOD**

(30) Priority: 11.01.2006 JP 2006003675
(71) Applicant: MITSUBISHI HEAVY INDUSTRIES, LTD., Tokyo 108-8215 (JP)
(72) Inventor: ITOU, Takehiko, Yokohama-shi, Kanagawa 236-8515 (JP); KURIBAYASHI, Shizuma, Yokohama-shi, Kanagawa 236-8515 (JP); IWAMURA, Yasuhiro, Yokohama-shi, Kanagawa 236-8515 (JP); NUKATSUKA, Shigehiro, Tokyo 108-8215 (JP); TSURUGA, Shigenori, Yokohama-shi, Kanagawa 236-8515 (JP); ISHII, Shinya, Yokohama-shi, Kanagawa 236-8515 (JP)
(74) Representative: HOFFMANN EITLE
(86) International application number: PCT/JP2007/050263
(87) International publication number: WO 2007/080930

(57) **Abstract**

Provided are a security gate system and a security gate control method capable of accurately inspecting inspection targets in a short period of time.

The security gate system includes a main route 2; a mass spectrograph 3 for analyzing a sample (for example, a ticket) obtained from an inspection target (for example, a facility user at an airport, etc.) moving in the main route 2; at least one branch route 10 that is divided from the main route 2 at the downstream side of a position where the sample is obtained in the moving direction of the inspection target; gates (a first gate 5 and a second gate 6), which are provided at branch sections of the branch route 10 for switching a flow path of the inspection target; and a control apparatus 20 for performing control to switch between the gates 5 and 6 based on an analysis result of the mass spectrograph 3.

## Description

### Technical Field

The present invention relates to a security gate system and a security gate control method that can be used at places where people gather, for example, stations, airports, harbors, baseball stadiums, soccer stadiums, event venues, theaters, museums, art galleries, and so forth.

### Background Art

At security gates at airports or the like, hand baggage of users is inspected with X-rays, and the shapes of objects therein are visually checked to detect if they are harmless. Accordingly, whether or not a hazardous article can be detected relies upon the inspector's skill.
Patent Document 1: Japanese Unexamined Patent Application, Publication No. 2002-170517
Patent Document 2: Japanese Translation of PCT International Application, Publication No. 2002-524767

### Disclosure of Invention

With this method, however, in addition to the need for a skilled inspector, it is difficult to process a large number of targets in a short period of time; therefore, this system has not been employed at railway stations or the like. In addition, pulsed-neutron inspection apparatuses and so forth that can inspect in more detail than when inspecting with X-rays have been developed, but the inspection time is longer than with X-ray inspection; therefore, they are not employed at airports, etc. in view of the processing time. Recently, ensuring security at places where people gather, such as those described above, has become a more important issue.

The present invention has been conceived in light of the circumstances describes above, and an object thereof is to provide a security gate system and a security gate control method capable of accurately inspecting inspection targets in a short period of time.

In order to solve the problems described above, the present invention employs the following solutions.
The present invention provides a security gate system comprising a main route; a mass spectrograph for analyzing a sample obtained from an inspection target moving in the main route; at least one branch route that is divided from the main route at the downstream side of a position where the sample is obtained in the moving direction of the inspection target; switching part, which is provided at a branch section of the branch route, for switching a flow path of the inspection target between the main route and the branch route; and a control apparatus for controlling the switching part based on an analysis result of the mass spectrograph.

The security gate system can be used at places where people gather, for example, stations, airports, harbors, baseball stadiums, soccer stadiums, event venues, theaters, museums, art galleries, and so forth. The inspection target is assumed to be, for example, at least any of users using such facilities, as well as things carried (for example, hand baggage, etc.) and worn (for example, clothes, etc.) by these users, and any hazardous substances included in the sample obtained from the users and the like are analyzed by the mass spectrograph. Collecting the sample while the inspection target is moving in the main route is preferably carried out in a short period of time without impeding the movement of the inspection target. For example, air blown onto the inspection target, or an article of usage certification handed over by the user, such as a ticket for the facility or a ticket for transportation (hereinafter, referred to as "ticket"), may be assumed as the sample.
Almost instant inspection is possible by the mass spectrograph for identifying the hazardous substance, for example an explosive, from the collected sample. Accordingly, the flow path of the inspection target is not disturbed. In addition, a known device can be used for the mass spectrograph.
The control apparatus controls the switching part (for example, a gate) to switch the route of the inspection target based on the detection results of the mass spectrograph. Accordingly, a specific target that requires more detailed inspection, which would impede the movement of other inspection targets if that specific target stayed in the main route, and other inspection targets that do not need detailed inspection are automatically guided to different routes. Only one branch route may be divided from the main route, or a plurality of branch routes may be provided according to assessment results, so as to carry out multiple inspections in more detail based on the detection results of the mass spectrograph.
In addition, the inspection target may be the people described above, things that they carry or clothes they wear, or it may be vehicles driven by the people, cargo at a cargo collection and distribution center, and so forth.

With the security gate system of the present invention, the inspection target may be a person, and a substance attached to a ticket that is handed over by the person to serve as the sample may be identified by the mass spectrograph.

With the security gate system of the present invention, by using the ticket as the sample, inspection is possible merely by the user passing through the security gate system of the present invention, like an ordinary gate.

The security gate system of the present invention may further include a detailed inspection apparatus for inspecting the sample obtained from the inspection target in the branch route in detail.

Because the detailed inspection apparatus is provided in the branch route, accurate inspection is possible when the assessment requires detailed inspection based on the detection results of the mass spectrograph. In this way, the system is configured in such a manner that the inspection targets are separated by the gate based on the inspection results of the mass spectrograph and are then inspected by the detailed inspection apparatus only when needed; therefore, the detection accuracy can be improved by inspecting in more detail when necessary (requiring inspection time) without impeding the movement of most of the inspection targets.
The detailed inspection apparatus may include a pulsed-neutron inspection apparatus and/or an X-ray inspection apparatus. Accordingly, the inspection is possible without opening the article serving as the target (for example, hand baggage). The pulsed-neutron inspection apparatus is more accurate than X-rays. Accordingly, it is possible to further improve the accuracy when using the pulsed-neutron inspection apparatus together with X-rays.

The security gate system of the present invention provided with the detailed inspection apparatus may further include a gate provided in the branch route at the downstream side of an inspection position of the detailed inspection apparatus in the moving direction of the inspection target, and the control apparatus may control opening/closing of the gate based on the detection results of the detailed inspection apparatus.

According to the detection results of the detailed inspection apparatus, it is possible, for example, to block the user from entering the facility, to guide him/her into an appropriate route further downstream, and so forth.

The security gate system of the present invention may further include a millimeter-wave analyzer for inspecting the inspection target that moves in the main route.

More accurate inspection is possible by combining the millimeter-wave analyzer with the mass spectrograph. In addition, the inspection time using the millimeter-wave analyzer is short, like the mass spectrograph; therefore, the movement of the inspection target is not disturbed.

In addition, a security gate control method of the present invention comprises collecting a sample from an inspection target that is moving in a main route; inspecting the sample with a mass spectrograph; and branching off, from the main route, the inspection target determined as requiring more detailed inspection according to an inspection result.

With the security gate control method of the present invention, a gate is controlled on the basis of detection results of the mass spectrograph to switch the route of the inspection target (for example, a person). Accordingly, a target that requires more detailed inspection, thus disturbing the flow path, and a target that does not require detailed inspection are automatically guided to different routes. The number of branch routes divided from the main route may be only one, or a plurality of branch routes may be provided according to assessment results so as to carry out multiple inspections in more detail based on the detection results of the mass spectrograph.

In the security gate control method of the present invention, the inspection target may be a person, and a substance attached to a ticket that is handed over by the person to serve as the sample may be identified by the mass spectrograph.

In the security gate control method of the present invention, by using the ticket as the sample, inspection is possible merely by the user passing through the security gate, like an ordinary gate.

The security gate control method of the present invention further comprises inspecting in detail in at least one branch route from among the branch routes for the inspection target.

Reliable inspection is carried out when more detailed inspection is determined to be required on the basis of the detection results of the mass spectrograph. With the security gate control method of the present invention in which detailed inspection is carried out, it is possible to block the flow path of the target or to guide it to an appropriate route on the basis of detailed inspection results.

With the present invention, the following advantages can be obtained.
An inspection target requiring detailed inspection, based on the inspection results of the mass spectrograph, is guided by the switching part, which is switched by the control apparatus, and inspected using the detailed inspection apparatus. In other words, because those inspection targets requiring inspection time are guided to the branch route, rapid inspection is possible without impeding a flow path of most of other inspection targets.
In addition, by using the ticket touched by the user as the sample obtained from the inspection target, inspection is possible without impeding the passage of users. Moreover, most users are allowed to pass through the gate merely by giving the ticket in the same way as when normally passing through a gate, thus avoiding confusion for the users.

### Brief Description of Drawings

[FIG. 1] Fig. 1 is a diagram showing, in outline, the configuration of a security gate system as an embodiment of the present invention.
[FIG. 2] Fig. 2 is a diagram showing, in outline, a millimeter-wave analyzer used for the security gate system.
[FIG. 3] Fig. 3 is a diagram showing identification of an explosive substance by a pulsed-neutron inspection apparatus used in the security gate system.
[FIG. 4] Fig. 4 is a flow chart showing a security gate control method performed by the security gate system.
[FIG. 5] Fig. 5 is a diagram showing, in outline, the configuration of a security gate system as another embodiment of the present invention.
[FIG. 6] Fig. 6 is a flow chart showing a security gate control method performed by the security gate system.
[FIG. 7] Fig. 7 is a diagram showing, in outline, the configuration of a security gate system as another embodiment of the present invention.
[FIG. 8] Fig. 8 is a flow chart showing a security gate control method performed by the security gate system.
[FIG. 9] Fig. 9 is a diagram showing, in outline, the configuration of a security gate system as another embodiment of the present invention.
[FIG. 10] Fig. 10 is a flow chart showing a security gate control method performed by the security gate system.
[FIG. 11] Fig. 11 is a diagram showing, in outline, the configuration of a security gate system as another embodiment of the present invention.
[FIG. 12] Fig. 12 is a flow chart showing a security gate control method performed by the security gate system.
[FIG. 13] Fig. 13 is a diagram showing, in outline, the configuration of a security gate system as another embodiment of the present invention.
[FIG. 14] Fig. 14 is a flow chart showing a security gate control method performed by the security gate system. Explanation of Reference Signs:

1: security gate system
2: main route
3: mass spectrograph
4: millimeter-wave analyzer
5: first gate (switching part)
6: second gate (switching part)
10: branch route
11: pulsed-neutron inspection apparatus (detailed inspection apparatus)
12: third gate
20: control apparatus
30: CPU
32: X-ray inspection apparatus (detailed inspection apparatus)

### Best Mode for Carrying Out the Invention

### First Embodiment

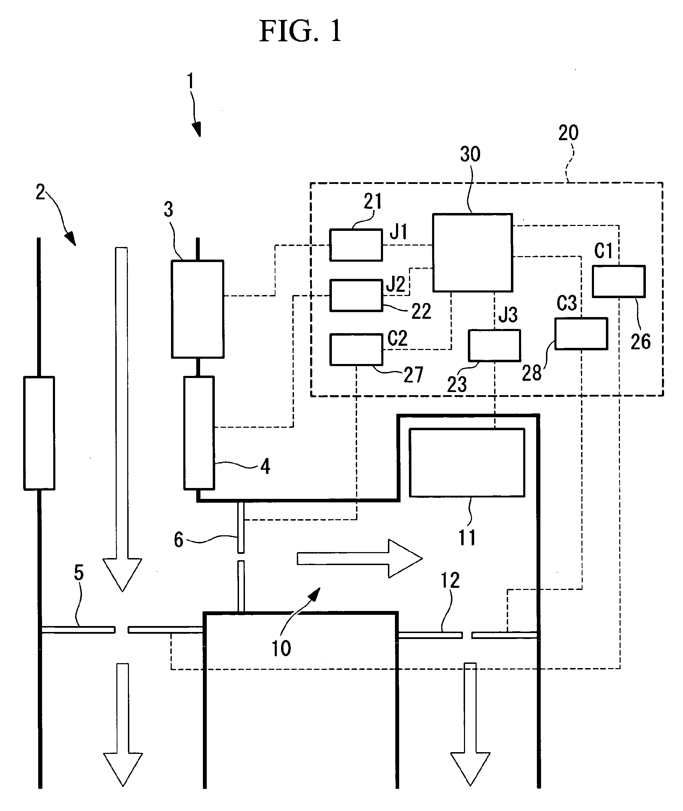

Fig. 1 is a diagram showing, in outline, the configuration of a security gate system as an embodiment of the present invention. This embodiment is a system for detecting a hazardous article in hand baggage belonging to or under clothes worn by a facility user (hereinafter simply referred to as "user") who, as an inspection target, uses facilities, such as an airport.
The security gate system 1 includes a main route 2, and a mass spectrograph 3 and a millimeter-wave analyzer 4 provided in the main route 2. A first gate 5 and a second gate 6 (switching part) are provided at the downstream side of the millimeter-wave analyzer 4. The first gate 5 is a door for opening and closing the main route 2, and the second gate 6 is a door for opening and closing an entrance of a branch route 10 that is divided from the main route 2 at the downstream side of the mass spectrograph 3 and the millimeter-wave analyzer 4. A pulsed-neutron inspection apparatus 11 is provided in the branch route 10, and a third gate 12 is provided at the downstream side thereof. The third gate 12 is a door for opening and closing the branch route 10.

The above described apparatuses are each controlled by a control apparatus 20. The control apparatus 20 includes a mass-spectrography-result assessing unit 21 for assessing inspection results provided by the mass spectrograph 3, a millimeter-wave inspection-results assessing unit 22 for assessing inspection results provided by the millimeter-wave analyzer 4, a pulsed-neutron inspection-results assessing unit 23 for assessing inspection results provided by the pulsed-neutron inspection apparatus 11, a first-gate control unit 26 for controlling the opening and closing of the first gate 5, a second-gate control unit 27 for controlling the opening and closing of the second gate 6, a third-gate control unit 28 for controlling the opening and closing of the third gate 12, and a CPU 30 for performing overall control of each of these control units and determining units.

The mass spectrograph 21 can employ a known technique described, for example, in Japanese Unexamined Patent Application, Publication No. 2002-170517. Specifically, it includes ionizing part for ionizing a sample gas with vacuum-ultraviolet light; an ion trap for accumulating ions of a hazardous substance (an explosive, etc.) having a specific mass from among ions ionized by the vacuum-ultraviolet light; and time-of-flight mass spectrographic part for accelerating the accumulated ions in the ion trap and identifying a chemical compound of the specific mass in the sample gas based on the time of flight of the accelerated ions.
Gas containing a substance attached to a ticket handed over by the user can be used as the sample gas.
Alternatively, air blown onto a person passing through may be extracted as the sample gas. Accordingly, it is possible to determine whether or not the hazardous substance is attached to clothes and the like.

In this embodiment, by using the mass spectrograph 3, the hazardous substance that is possibly carried by the user can be directly identified in a short period of time without carrying out visual inspection.

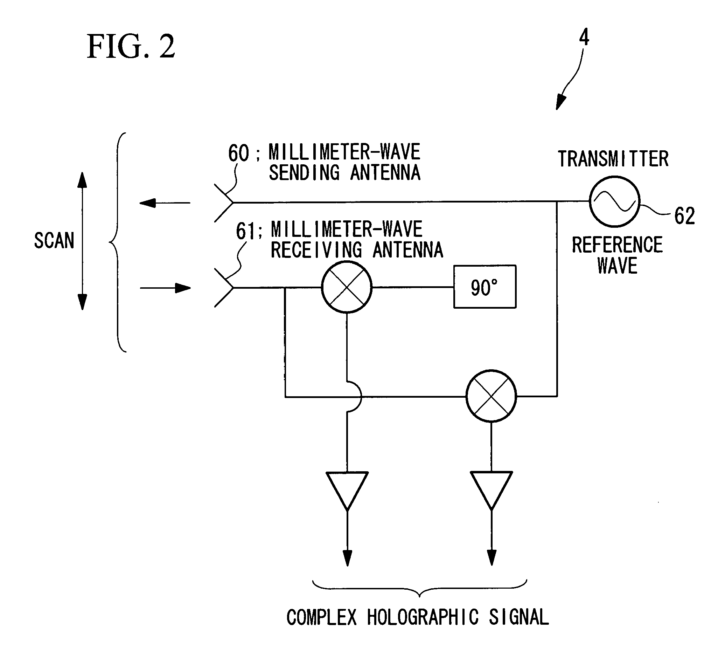

A known apparatus can be used for the millimeter-wave analyzer 4. For example, it is possible to use a scan system described in Japanese Translation of PCT International Application, Publication No. 2002-524767. As shown in outline in Fig. 2, it includes a millimeter-wave sending antenna 60 and a millimeter-wave receiving antenna 61. The user and his/her hand baggage are scanned with millimeter waves sent by the transmitter 62, and a complex holographic signal is obtained from the received waves. By doing so, an operator visually assesses personal belongings of the user.
Accordingly, by using the millimeter-wave analyzer 4, it is possible to scan baggage and objects hidden under the clothes that the user is wearing when the user passes in front of the antennas 60 and 61.
Thus, by using the millimeter-wave analyzer 4, the user can be inspected without being stopped. In addition, unlike X-ray inspection apparatuses that are conventionally used at airports and so on, it is possible to safely inspect the human body. The inspection can be completed in a short period of time, i.e., in approximately one second, using the mass spectrograph 3 and the millimeter-wave analyzer 4.

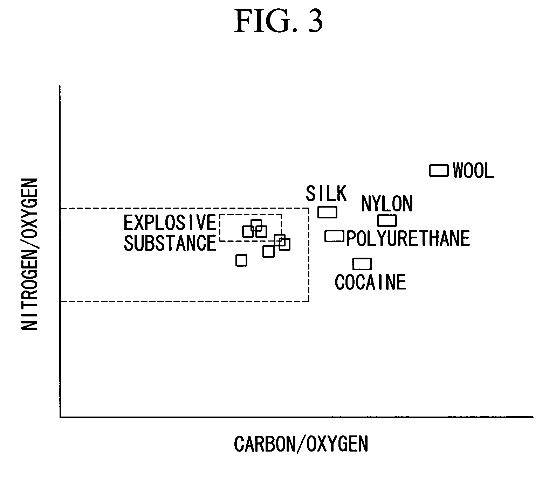

A known apparatus can be used for the pulsed-neutron inspection apparatus 11. For example, it is possible to use an apparatus that is conventionally used for containers to identify an explosive by detecting gamma rays. By irradiating the hand baggage or the like with pulsed neutrons and by using gamma rays produced by both fast neutrons and thermal neutrons, the ratio of elements shown in Fig. 3 is calculated. An explosive substance can be identified from the ratio of nitrogen to oxygen and the ratio of carbon to oxygen.
Accordingly, it is possible to identify approximately 10 kg of an explosive substance in a few minutes with a false alarm rate of 1% or less.

A known computer system can be used for the control apparatus 20; it has a known configuration including a CPU 30 etc., as well as a ROM, a RAM, a storage device, such as an HDD on which programs are stored, an input-output interface, a display, and so forth.

The first gate 5 and the second gate 6 guide a flow of people passing along the main route 2 to the branch route 10 as necessary. Opening/closing is controlled by the control apparatus 20 to select either route.

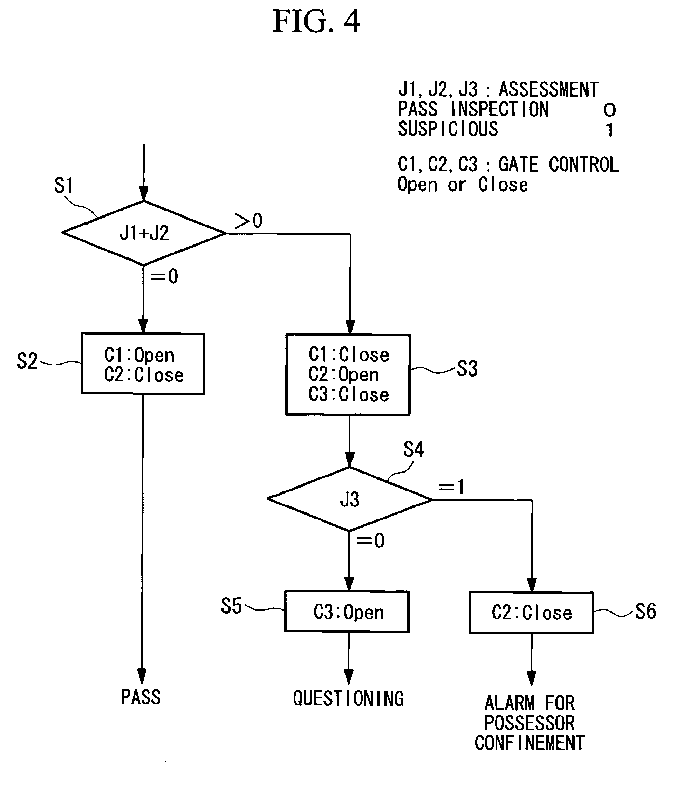

The operation of the security gate system 1, configured in this way, when controlled by the CPU 30, will be described with reference to the flow chart shown in Fig. 4.
The user inserts the ticket that he/she is holding into the mass spectrograph 3 when he/she passes through the main route 2. The mass spectrograph 3 identifies any hazardous substance attached to the ticket. For example, if the user has previously touched an explosive or the like, molecules thereof are attached to the ticket via contact with his/her hand. The mass spectrograph 3 identifies the substance attached to the ticket on the basis of molecular weight.

Next, when the user passes through the millimeter-wave analyzer 4, it detects whether or not there is any hazardous substance in his/her hand baggage or under the clothes he/she is wearing.
The mass spectrograph 3 and the millimeter-wave analyzer 4 complete the detection in approximately one second; therefore, the user does not need to stop for the inspection.
The inspection results of the mass spectrograph 3 are assessed by the mass-spectrography-result assessing unit 21. When passing the inspection, an output value J1 = 0 is output to the CPU 30, and when a hazardous substance is suspected of being attached to the ticket, an output value J1 = 1 is output. The inspection results of the millimeter-wave analyzer 4 are assessed by the millimeter-wave inspection-results assessing unit 22. In the same way as described above, when passing the inspection, an output value J2 = 0 is output to the CPU 30, and when the user is suspected of carrying a hazardous substance, an output value J2 = 1 is output.
According to Step S1 in Fig. 4, the CPU 30 proceeds to Step S2 when J1 + J2 = 0, and it proceeds to Step S3 when J1 + J2 > 0. In other words, when a suspected hazardous substance is detected by either one of the mass spectrograph 3 or the millimeter-wave analyzer 4, the CPU 30 proceeds to Step S3.

In Step S2, the CPU 30 controls each gate. The first gate 5 is opened, and the second gate 6 is closed. By doing so, the user is guided in the main route 2 and passes through the first gate 5 without stopping. After passing through the first gate 5, the user continues to pass straight through the security gate system 1, and the process ends.
In Step S3, the CPU 30 controls each gate. The first gate 5 is closed, the second gate 6 is opened, and the third gate 12 is closed. By doing so, the user is guided to the branch route 10.
At the branch route 10, the user's hand baggage or the like is analyzed by the pulsed-neutron inspection apparatus 11. The inspection results of the pulsed-neutron inspection apparatus 11 are assessed by the pulsed-neutron inspection-results assessing unit 23. When passing the inspection, an output value J3 = 0 is output to the CPU 30, and when any hazardous substance is suspected of being in the baggage, an output value J3 = 1 is output. In Step S4, according to this value, the CPU 30 proceeds to Step S5 when the value is zero and proceeds to Step S6 when the value is one.

In Step S5, the CPU 30 opens the third gate 12, and the user is guided via the branch route 10 and passes through the third gate 12. If necessary, this user can be manually inspected by questioning, etc.
In Step S6, the CPU 30 closes the second gate 6, thus preventing the user from passing through. It is possible for the CPU 30 to issue an alarm, if necessary.

In this way, with the security gate system 1 of this embodiment, most users complete a security check merely by passing through the main route 2. Some users requiring more detailed inspection are guided by the gate switched by the CPU 30 and are inspected by the pulsed-neutron inspection apparatus 11. Accordingly, a quick inspection is possible without disturbing the users passing through the main route 2.
In addition, because the substance attached to the ticket which the users touched is detected, the users are not disturbed while walking. Most users are allowed to pass through the gate merely by giving the ticket in the same way as when normally passing through a gate, thus avoiding confusion for the users.
In addition, a precise inspection can be made by combining the mass spectrograph 3 and the millimeter-wave analyzer 4. In particular, a hazardous substance is detected not only by relying on the inspector's skill, but also automatically, by using the mass spectrograph 3, thus allowing more reliable inspection.

### Second Embodiment

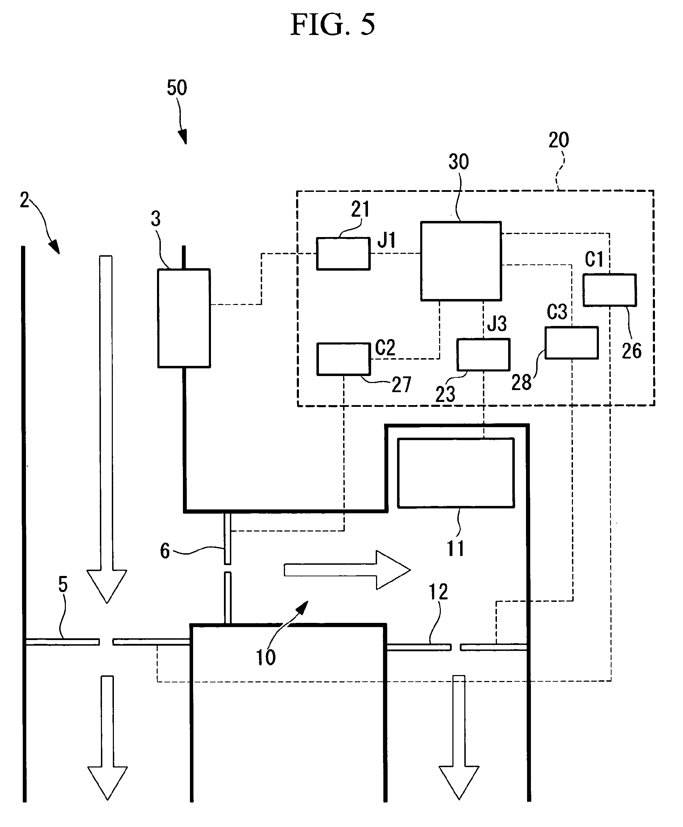

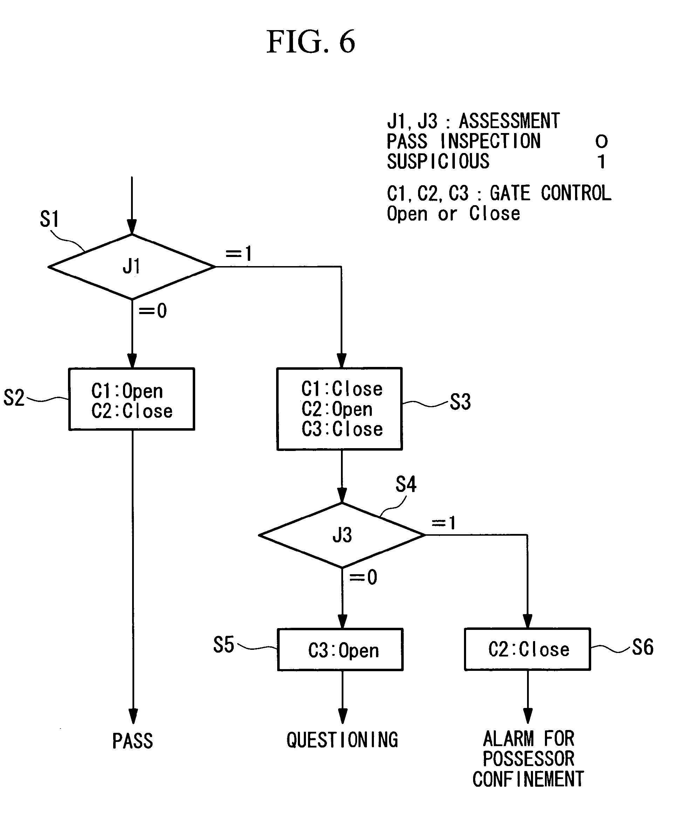

Fig. 5 shows a second embodiment of a security gate system. The configuration of this security gate system 50 is the same as that of the first embodiment described above, except that the millimeter-wave analyzer 4 is not provided.
In this embodiment, the CPU 30 operates according to the flow shown in Fig. 6. In Step S1, the CPU 30 proceeds to Step S2 when J1 = 0, and proceeds to Step S3 when J1 = 1. In other words, when the mass spectrograph 3 detects a suspected hazardous substance, the CPU 30 proceeds to Step S3. The subsequent configuration is the same as in the first embodiment described above.
In this embodiment, similar to the above embodiment, a quick inspection is also possible without impeding the passage of users.

### Third Embodiment

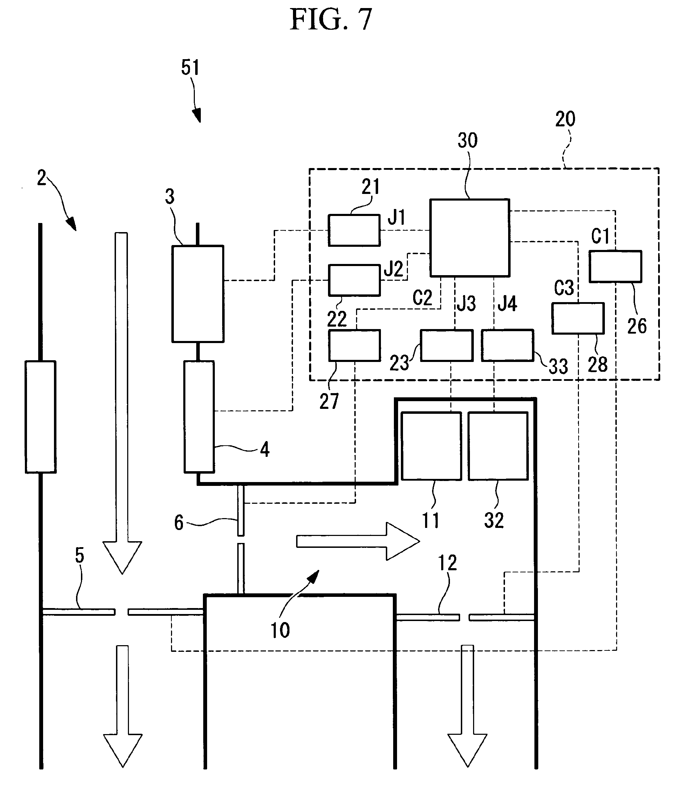

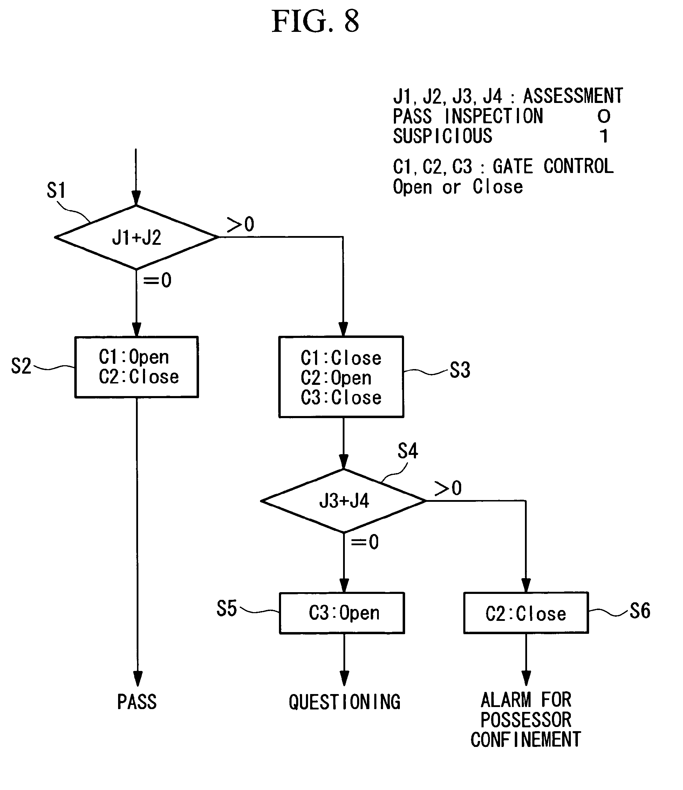

Fig. 7 shows a third embodiment of a security gate system. The configuration of this security gate system 51 is the same as that of the first embodiment except that it includes an X-ray inspection apparatus 32 in addition to the pulsed-neutron inspection apparatus 11. The detection results of the X-ray inspection apparatus 32 are assessed by an X-ray inspection-results assessing unit 33. When passing the inspection, the X-ray inspection-results assessing unit 33 outputs an output value J4 = 0 to the CPU 30, and when any hazardous substance is suspected of being in the baggage, it outputs an output value J4 = 1.
The CPU 30 operates according to the flow shown in Fig. 8. In Step S4, the CPU 30 proceeds to Step S5 when J3 + J4 = 0, and it proceeds to Step S6 when J3 + J4 > 0. In other words, when either one of the pulsed-neutron inspection apparatus 11 or the X-ray inspection apparatus 32 detects any suspicious hazardous substance, the CPU 30 proceeds to Step S6. Other steps are the same as in the first embodiment described above.
According to this embodiment, it is possible to obtain the same effect as that in the first embodiment. In addition, the detection accuracy can be improved because the hazardous substance is detected by both the X-ray inspection apparatus 32 and the pulsed-neutron inspection apparatus 11.

### Fourth Embodiment

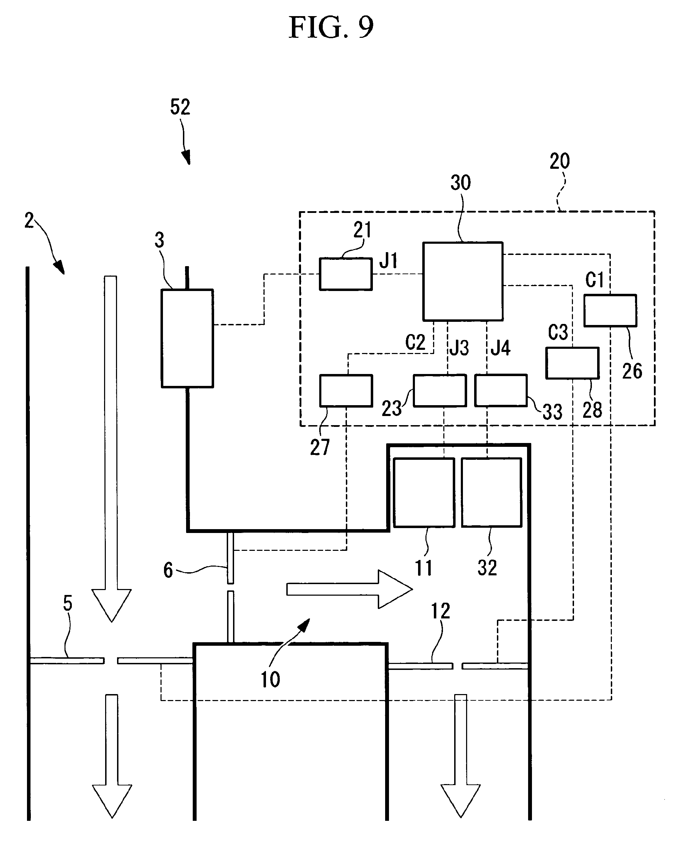

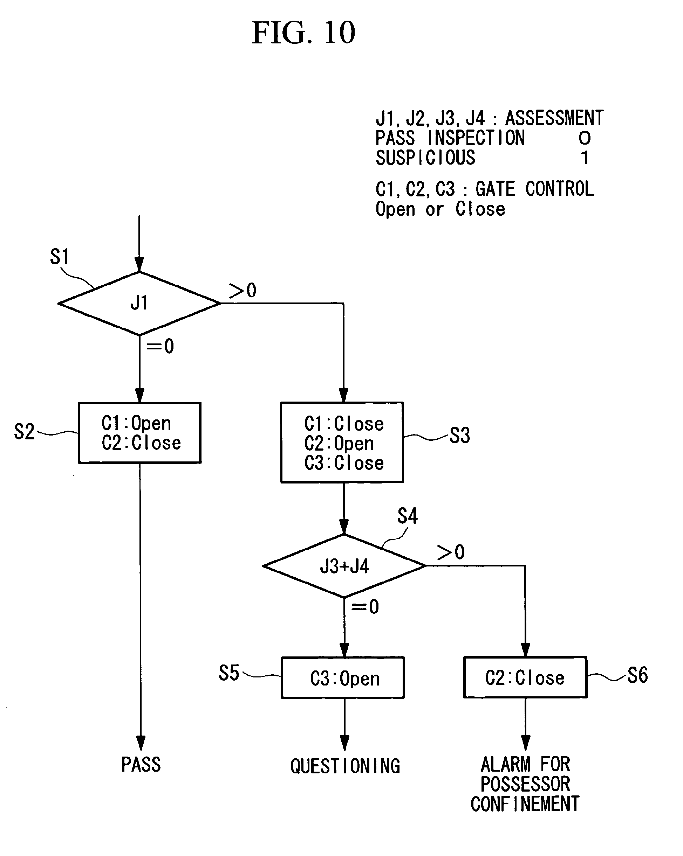

Fig. 9 shows a fourth embodiment of a security gate system. Like the second embodiment, this security gate system 52 does not include the millimeter-wave analyzer 4, and like the third embodiment, is provided with both the X-ray inspection apparatus 32 and the pulsed-neutron inspection apparatus 11. The remaining configuration is the same as that of the first embodiment.
The operation flow of this system is shown in Fig. 10. The details are the same as each of the above embodiments, and a description thereof will be omitted.
According to this embodiment, similar to the third embodiment described above, the detection accuracy can be improved because the hazardous substance is detected by the X-ray inspection apparatus 32 together with the pulsed-neutron inspection apparatus 11.

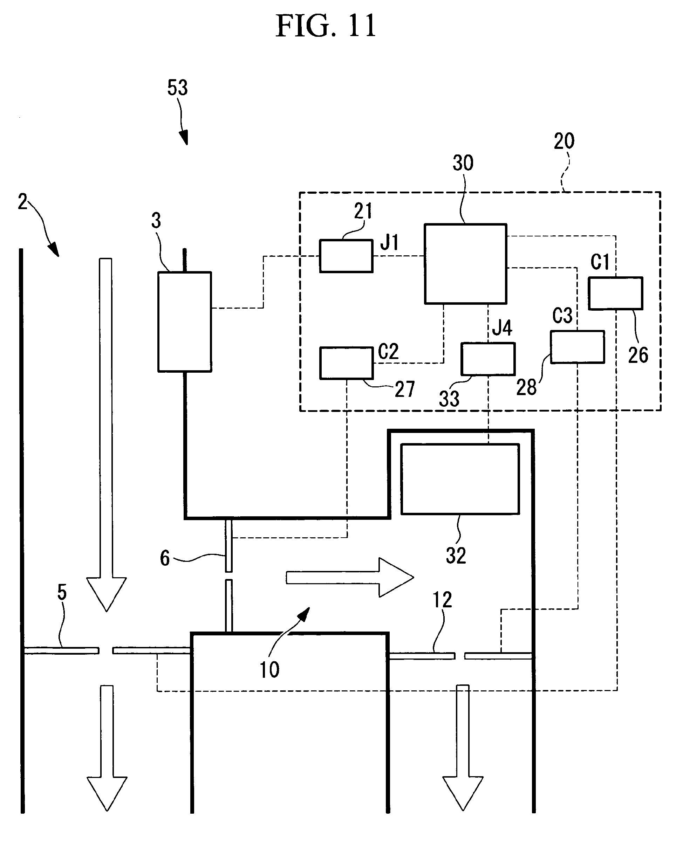

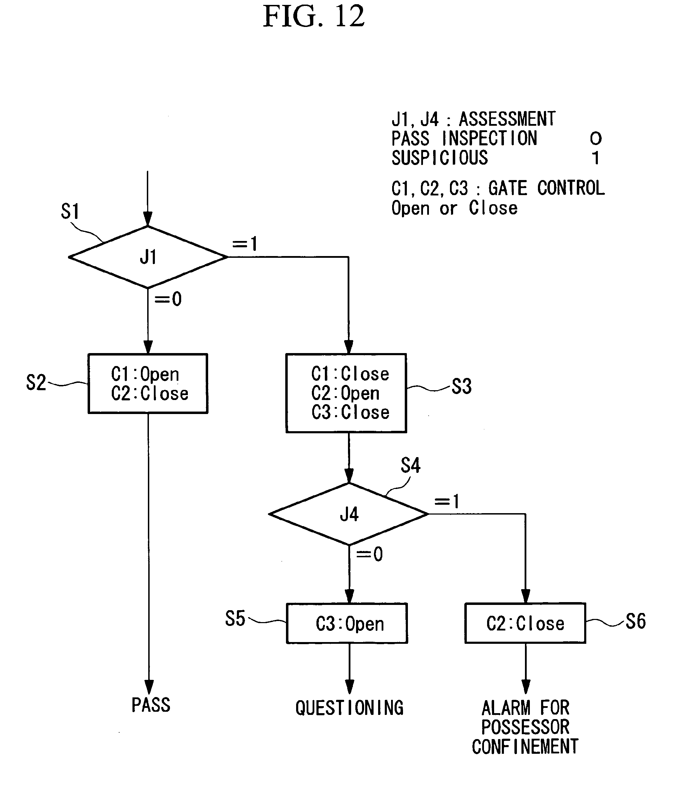

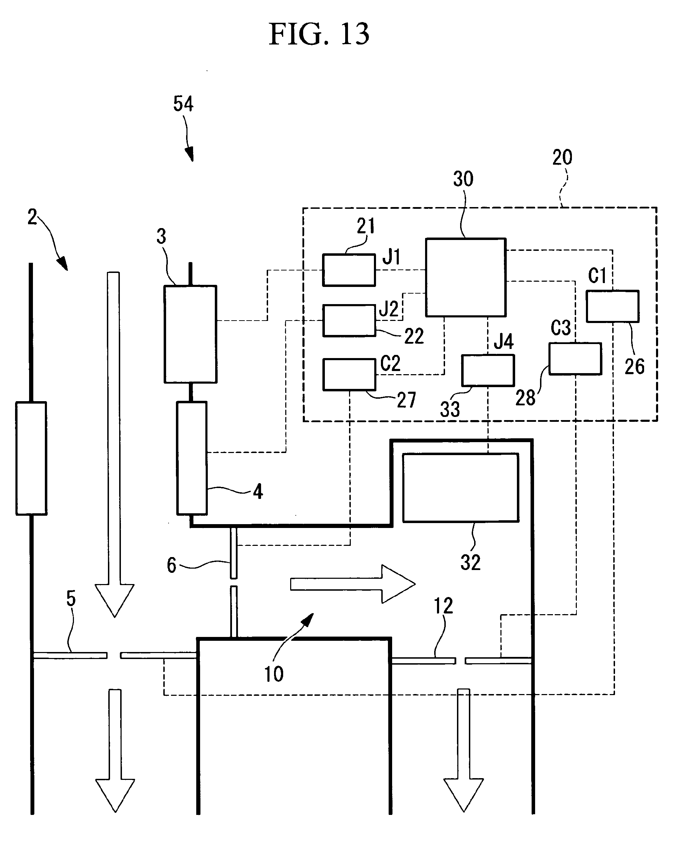

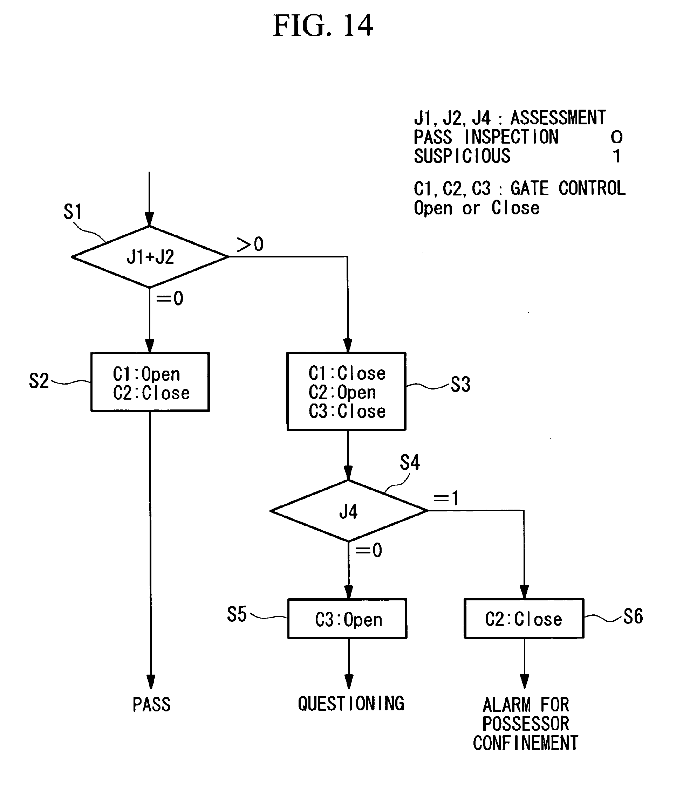

In addition, as a modification, the following embodiment is possible. Specifically, as in the security gate system 53 in the fifth embodiment shown in Figs. 11 and 12, the X-ray inspection apparatus 32 may be provided instead of the pulsed-neutron inspection apparatus 11 in the second embodiment. In addition, as in the security gate system 54 in the sixth embodiment shown in Figs. 13 and 14, the X-ray inspection apparatus 32 may be provided instead of the pulsed-neutron inspection apparatus 11 in the first embodiment.

Furthermore, in Step S4 in the third and the fourth embodiments described above, J3 + J4 > 0 is defined as a condition for proceeding to Step S6; however, the process may proceed to Step S6 when J3 + J4 > 1. In other words, it may proceed to Step S6 and issue an alarm when the detection results of both the pulsed-neutron inspection apparatus 11 and the X-ray inspection apparatus 32 indicate something suspicious.

In addition, in each of the embodiments described above, the mass spectrograph 3 identifies the hazardous substance attached to a ticket; however, air may be blown onto the user, and the substance contained in the air may be inspected. In this case, rapid inspection is also possible without impeding the passage of users.

In addition, instead of providing the gate at the downstream side of the mass spectrograph 3, the present invention may be applied to a system in which, for example, a ticket or the like handed over by a facility user passing through the main route 2 is inspected by the mass spectrograph 3 and an alarm is issued according to the inspection results. In this case, a person in charge may inspect the user in detail or may guide the user to another place. In such a case, the user can be inspected without being disturbed merely by handing over the ticket in the same manner as when using an ordinary facility. In addition, this technique can be applied to existing facilities without the need for large-scale modifications, such as changing routes or providing gates.

## Claims

1. A security gate system comprising: a main route; a mass spectrograph for analyzing a sample obtained from an inspection target moving in the main route; at least one branch route that is divided from the main route at the downstream side of a position where the sample is obtained in the moving direction of the inspection target; switching part, which is provided at a branch section of the branch route, for switching a flow path of the inspection target between the main route and the branch route; and a control apparatus for controlling the switching part based on an analysis result of the mass spectrograph.

2. A security gate system according to Claim 1, wherein the inspection target is a person, and a substance attached to a ticket that is handed over by the person to serve as the sample is identified by the mass spectrograph.

3. A security gate system according to Claim 1 or 2, further comprising a detailed inspection apparatus for inspecting the inspection target in the branch route in detail.

4. A security gate system according to Claim 3, wherein the detailed inspection apparatus includes a pulsed-neutron inspection apparatus.

5. A security gate system according to Claim 3 or 4, wherein the detailed inspection apparatus includes an X-ray inspection apparatus.

6. A security gate system according to one of Claims 3 to 5, further comprising a gate provided in the branch route at the downstream side of an inspection position of the detailed inspection apparatus in the moving direction of the inspection target, and the control apparatus controls opening/closing of the gate based on a detection result of the detailed inspection apparatus.

7. A security gate system according to one of Claims 1 to 6, further comprising a millimeter-wave analyzer for inspecting the inspection target that moves in the main route.

8. A security gate control method comprising: collecting a sample from an inspection target that is moving in a main route; inspecting the sample by a mass spectrograph; and branching off, from the main route, the inspection target determined as requiring more detailed inspection according to an inspection result.

9. A security gate control method according to Claim 8, wherein the inspection target is a person, and a substance attached to a ticket that is handed over by the person to serve as the sample is identified by the mass spectrograph.

10. A security gate control method according to Claim 8 or 9, further comprising inspecting in detail in at least one branch route from among the branch routes for the inspection target.
